# EUROPEAN PATENT APPLICATION

(11) **EP 1 798 884 A1**
(43) Date of publication of application: **20.06.2007**
(21) Application number: 05790660.4
(22) Date of filing: 07.10.2005
(51) Int. Cl.: H04J 11/00, H04J 1/00, H04Q 7/36

(54) **BASE STATION DEVICE, RADIO COMMUNICATION SYSTEM AND RADIO TRANSMISSION METHOD**

(30) Priority: 07.10.2004 JP 2004294744
(71) Applicant: SHARP KABUSHIKI KAISHA, Osaka-shi, Osaka 545-8522 (JP)
(72) Inventor: SHITARA, Shoichi, Chiba 2900056 (JP)
(74) Representative: Brown, Kenneth Richard
(86) International application number: PCT/JP2005/018646
(87) International publication number: WO 2006/038694

(57) **Abstract**

[Problem] To realize radio data communication with high frequency efficiency and make all mobile station apparatus existing within a cell perform radio data communication without being affected by the deteriorated propagation path characteristics.

[Means for Solution] A base station apparatus (1) transmitting radio signals using a multicarrier modulation system includes a time manager (12) for obtaining time information to manage it; a transmission power setting section (11) for setting to some subcarriers among all subcarriers a first transmission power which enables the radio signals to reach all areas within a cell; a transmitter (2b, 4, 8, 9, and 10) for transmitting the radio signals using the subcarriers to which the first transmission power is allocated; and the transmission power setting section (11) changes at a certain time interval, subcarriers to which the first transmission power is set based on the obtained time information.

## Description

### Technical Field

The present invention relates to a base station apparatus transmitting radio signals using a multicarrier modulation system and to a radio communication system and a radio communication method.

### Background Art

Recently, a mobile communication system has been rapidly developed through an improvement of communication quality and an increased reliability. It has been used for a voice call conventionally, but not limited to this, used also for a web browsing now. Further, contents other than sound, such as image data including a moving image and a still image and character data, have been developed. Thereby, the amount of information used by private persons is rapidly increasing. In addition, the circumstances like an introduction of a fixed rate system in a mobile communication system require speeding up and higher capacity of the mobile communication system.

Various researches have been performed in response to the above-mentioned requests, and as a very spotlighted communication system in view of the frequency efficiency and fading resistance property, a multicarrier modulation system using OFDM (Orthogonal Frequency Division Multiplexing) may be listed. The OFDM system is characterized in that subcarriers are orthogonal with one another, therefore they can be closely arranged without inter-carrier interference, realizing broadband transmission using frequency band very efficiently to allow a high transmission rate communication.

The OFDM modulation system is also used for wireless LAN standard such as IEEE 802.11a at 5.2 GHz band. However, in such wireless LAN, if access points are located closely, their using the same frequency band causes the interference among them, making the communication impossible. Thus, they are generally used as isolated access points.

One method of using the access points in a plurality of consecutive cells is (1) setting channels, a frequency band to be used in each channel being divided into several subcarriers, and using a frequency channel not mutually interfering with those of adjacent cells, namely, a different frequency channel.

An alternative method of, (2) setting an upper limit value of power for each radio channel to make areas where the frequency band which do not mutually interfere adjacent to one another as cells is also known as disclosed in Japanese Patent Application Laid-Open No. 2003-087192.
[Patent Document] Application Laid-Open No. 2003-087192

### Disclosure of the Invention

### Problem to be solved by the Invention

However, there were the following problems in the above-mentioned conventional technique. In the above-mentioned method (1) of dividing the frequency band into several subcarriers, there are drawbacks of degrading the frequency efficiency and decreasing the number of mobile station apparatus which may be accommodated in a cell. Further, in the above-mentioned method (2) of setting an upper limit value of power for each radio channel, there were drawbacks that radio data communication will be terminated unless the mobile station apparatus moves to a place where the frequency characteristic is good in the cell or it moves to an adjacent cell to start the communication with other base station apparatus in case where the propagation path characteristics of the frequency channels that can be used on side of the mobile station apparatus in the vicinity of the cell edge is bad due to the affection of obstacles or the like on the propagation path of the radio communication.

The present invention has been devised, taking into consideration of the above-mentioned circumstances, aiming at providing a base station apparatus, a radio communication system and a radio communication method capable of realizing radio data communication with high frequency efficiency, and making all mobile station apparatus exiting in the cell perform the radio data communication without being affected by the deteriorated propagation path characteristics.

### Means for solving the problem

(1) To solve the above-mentioned problems, the present invention has taken the following measures. That is, a base station apparatus according to the present invention transmitting radio signals using a multicarrier modulation system, includes a time manager for obtaining time information to manage it; a transmission power setting section for setting to some subcarriers among all subcarriers a first transmission power which enables the radio signals to reach all areas within a cell; a transmitter for transmitting the radio signals using the subcarriers to which the first transmission power is allocated; and the transmission power setting section changes at a certain time interval, subcarriers to which the first transmission power is set based on the obtained time information.

In this way, by changing at a certain time interval, the subcarriers to which the first transmission power which enables the radio signals to reach all areas within a cell is set, it is possible to configure a one-cell reuse system in which while using the same frequency band as those of the adjacent base station apparatus, they do not interfere with each other. Further, even if the propagation path characteristics are bad when transmitting the radio signals using the subcarriers in a specific frequency band to which the first transmission power is set to one mobile station apparatus, it is possible to transmit the radio signals to the above-mentioned mobile station apparatus using the subcarriers in other frequency band to which the first transmission power has been set, as the subcarriers to which the first transmission power is set, are changed at the certain time interval. Thereby, it is possible to use all frequency bands in all areas within a cell, enabling to perform the radio communication seamlessly.

(2) Further, the base station apparatus according to the present invention is characterized in that, the transmission power setting section sets to subcarriers other than those to which first transmission power is set, the transmission power less than a second transmission power which is a maximum transmission power not interfering with adjacent cells; and the transmitter transmits the radio signals using the subcarriers to which the first transmission power is set and the subcarriers to which the transmission power less than the second transmission power is set.

In this way, by setting the transmission power below the second transmission power which is the maximum transmission power not interfering with the adjacent cells to the subcarriers other than those to which the first transmission power is set, it is possible to avoid mutual interference with the adjacent base station apparatus, while using the same frequency band. Further, as the subcarriers to which the first transmission power is set and the subcarriers to which the transmission power below the second transmission power is set, are switched at the certain time interval, it is possible to set the transmission power of each subcarrier to appropriate values according to the reception characteristic of each mobile station apparatus and a requested transmission rate and the like.

(3) Further, the base station apparatus according to the present invention includes a detector for detecting the propagation path characteristics of the radio signals in the downward direction transmitted from a plurality of mobile station apparatus existing within the cell; and the transmission power setting section utilizes the radio signals to the mobile station apparatus, the detected propagation path characteristics to which are relatively low, using the subcarriers to which the first transmission power is set.

In this way, by transmitting the radio signals to the mobile station apparatus with relatively low detected propagation path characteristics, using the subcarrier to which the first transmission power is set, it is possible to make the mobile station apparatus which is physically distant from the base station apparatus or the mobile station apparatus with low propagation path characteristics due to the affection of obstacles or the like, receive the transmitted radio signals seamlessly.

(4) Further, the base station apparatus according to the present invention includes a detector for detecting the propagation path characteristics of the radio signals in the downward direction transmitted from one or more mobile station apparatus existing within the cell, and the transmission power setting section determines whether the detected propagation path characteristics are lower than threshold values for each mobile station apparatus, and transmits the radio signals to the mobile station apparatus the detected propagation path characteristics to which are lower than the threshold values, using the subcarriers to which the first transmission power is set.

In this way, by transmitting the radio signals to the mobile station apparatus with the detected propagation path characteristics lower than the threshold values, using the subcarriers to which the first transmission power is set, it is possible to make the mobile station apparatus with propagation path characteristics lower than the threshold values and which is considered to be physically distant from the base station apparatus or the mobile station apparatus with propagation path characteristics considered to be low due to the affection of obstacles or the like, receive the transmitted radio signals seamlessly.

(5) Further, the base station apparatus according to the present invention is characterized in that, when the total number of the mobile station apparatus existing within the cell is U, the total number of subcarriers used for transmission is K, the total number of the mobile station apparatus to which the radio signals are to be transmitted using the subcarriers to which the first transmission power is set is Uh, and the total number of the subcarriers to which the first transmission power is set is J, in the case of (Uh*K/U)>J, the transmission power setting section allocates (J/Uh) subcarriers to which the first transmission power is set per mobile station apparatus to the mobile station apparatus to which the radio signals are to be transmitted using the subcarriers to which the first transmission power is set, and in the case of (Uh*K/U) ≤ J, it allocates (K/U) subcarriers to which the first transmission power is set per mobile station apparatus to the mobile station apparatus to which the radio signals are to be transmitted using the subcarriers to which the first transmission power is set.

In this way, by determining the number of allocated subcarriers depending on the total number of the mobile station apparatus to which the radio signals are to be transmitted using the subcarriers to which the first transmission power is set, it is possible to allocate the subcarriers to which the first transmission power is set as many as possible to the mobile station apparatus. Consequently, it is made possible to make the mobile station apparatus receive the transmitted radio signals at all areas within the cell.

(6) Further, the radio communication system according to the present invention includes a plurality of the base station described in any of the descriptions above, transmits radio signals to the mobile station apparatus existing within a cell from the base station apparatus using a multicareer modulation system, and all of the transmission power setting sections of each of the base station apparatus change subcarriers to which the first transmission power is set to subcarriers having frequencies different from those of other base station apparatus constituting adjacent cells at the same time of day.

In this way, all the transmission power setting sections in each base station apparatus change the subcarriers to which the first transmission power is set to the subcarriers having frequencies different from those of other base station apparatus constituting the adjacent cells at the same time of day, therefore, it is possible to configure a one-cell repetition radio communication system in which while using the same frequency band as those of the adjacent base station apparatus, they do not interfere with one another. Further, even if the propagation path characteristics are bad when transmitting the radio signals using the subcarriers in a specific frequency band to which the first transmission power is set to one mobile station apparatus, the subcarriers to which the first transmission power is set, are changed at the certain time interval, therefore, it is possible to transmit the radio signals to the above-mentioned mobile station apparatus using subcarriers in other frequency band to which the first transmission power is set. Thereby, it is possible to use all frequency bands at all areas within the cell, enabling to perform the radio communication seamlessly.

(7) Further, a radio communication method according to the present invention is a method of transmitting radio signals using a multicarrier modulation system, and the method includes the steps of: obtaining time information; setting to some subcarriers among all subcarriers a first transmission power enabling the radio signals to reach all areas within a cell; setting to subcarriers other than those to which the first transmission power is set, a transmission power below a second transmission power which is a maximum transmission power not interfering with adjacent cells; transmitting the radio signals using the subcarriers to which the first transmission power is set and the subcarriers to which the transmission power below the second transmission power is set; and changing subcarriers to which the first transmission power is set and subcarriers to which the second transmission power is set, at the certain time interval based on the obtained time information.

In this way, by transmitting the radio signals using the subcarriers to which the first transmission power enabling the radio signals to reach all areas within the cell, is set, and the subcarriers to which the transmission power below the second transmission power which is the maximum transmission power not interfering with adjacent cells, is set, and changing the subcarriers to which the first transmission power is set and the subcarriers to which the second transmission power is set, at the certain time interval, it is possible to configure a one-cell reuse system in which while using the same frequency band as those of the adjacent base station apparatus, they do not interfere with one another. Further, even if the propagation path characteristics are bad when transmitting the radio signals using the subcarriers in a specific frequency band to which the first transmission power is set to one mobile station apparatus, it is possible to transmit the radio signals to the above-mentioned mobile station apparatus using the subcarriers in other frequency band to which the first transmission power is set as the subcarriers to which the first transmission power is set are changed at the certain time interval. Thereby, it is possible to use all frequency bands at all areas within the cell, enabling to perform the radio communication seamlessly. Further, as the subcarriers to which the first transmission power is set and those to which the transmission power below the second transmission power is set may be switched at the certain time interval, the transmission power of each subcarrier may be set to appropriate value according to the reception characteristic of each mobile station apparatus existing within the cell and the requested transmission rate and the like.

### Effect of the Invention

According to the present invention, by changing the subcarriers to which the first transmission power enabling the radio signals to reach all areas within a cell, is set at a certain time interval, it is possible to configure a one-cell reuse system in which while using the same frequency band as those of the adj acent base station apparatus, they do not interfere with one another. Further, even if the propagation path characteristics are bad when transmitting the radio signals using the subcarriers in a specific frequency band to which the first transmission power is set to one mobile station apparatus, it is possible to transmit the radio signals to the above-mentioned mobile station apparatus using the subcarriers in other frequency band to which the first transmission power is set as the subcarriers to which the first transmission power is set are changed at the certain time interval. Thereby, it is possible to use all frequency bands at all areas within the cell, enabling to perform the radio communication seamlessly.

### Best Modes for Carrying Out the Invention

A radio communication system according to the present embodiment will be described hereinafter. The radio communication system includes a plurality of base station apparatus and transmits radio signals to mobile station apparatus existing within a cell configured by each base station apparatus, using a multicarrier modulation system. Then, each base station apparatus sets to some subcarriers among all subcarriers a first transmission power (P1) enabling radio signals to reach all areas within the cell, and sets the subcarriers other than those to which the first transmission power is set, transmission power below second transmission power (P2) which is the maximum transmission power not interfering with adjacent cells. The amount of the transmission power set to each subcarrier is previously determined as "transmission power profile". In this embodiment, each base station apparatus changes the subcarriers to which the first transmission power (P1) enabling the radio signals to reach all areas within the cell is set to subcarriers having frequencies different from those of other base station apparatus constituting adjacent cells at the same time of day at certain time interval. That is, each base station apparatus changes the transmission power profiles in which positions of the subcarriers to which the first transmission power is set are different from one another in a certain period at the same time of day.

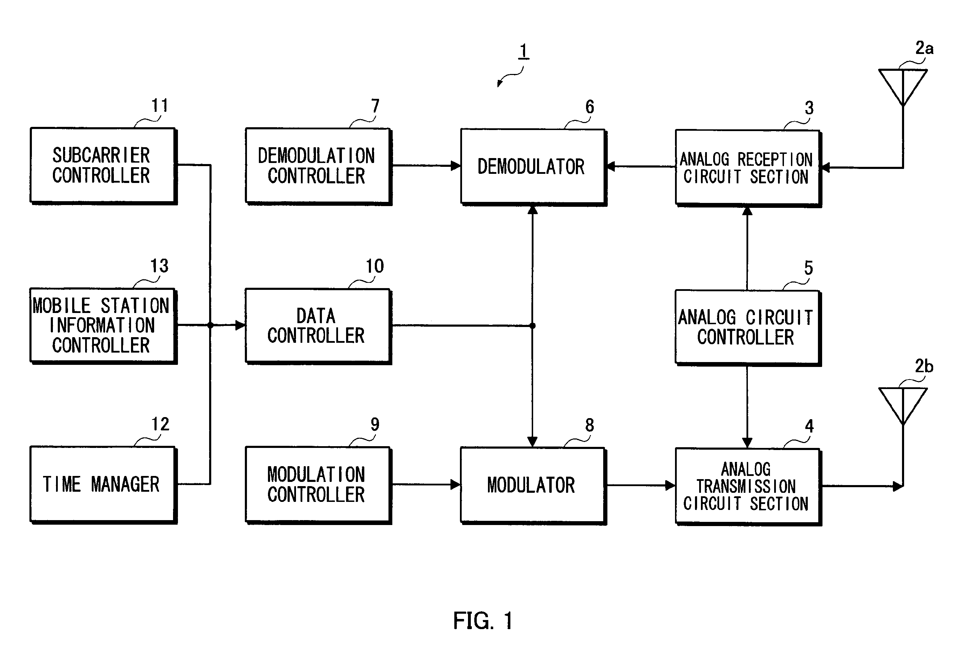

Fig. 1 is a block diagram showing the outline configuration of the base station apparatus according to the present embodiment. As shown in Fig. 1, a base station apparatus 1 transmits/receives radio signals via a plurality of antennas (herein, two antennas) 2a and 2b. An analog reception circuit section 3 converts a received high-frequency signal into a digital signal. An analog transmission circuit section 4 converts a digital signal into a high-frequency signal. An analog circuit controller 5 controls the analog reception circuit section 3 and the analog transmission circuit section 4. A demodulator 6 is composed of a digital signal processing circuit for processing received data, and a demodulation controller 7 controls the demodulator 6. In addition, a modulator 8 is composed of a digital signal processing circuit for processing transmission data, and a modulation controller 9 controls the modulator 8. A data controller 10 performs a control of transmission and reception data such as re-transmission and re-reception. A subcarrier controller 11 controls transmission power of each subcarrier and a user allocation and the like. A time manager 12 manages time and a mobile station information controller 13 manages the propagation path characteristics of each mobile station apparatus and the like. In addition, the antenna 2b, the analog transmission circuit section 4, the modulator 8, the modulation controller 9, and the data controller 10 constitute a transmitter, and the subcarrier controller 11 constitutes a transmission power setting section. Further, a mobile station information controller 13 constitutes a detector.

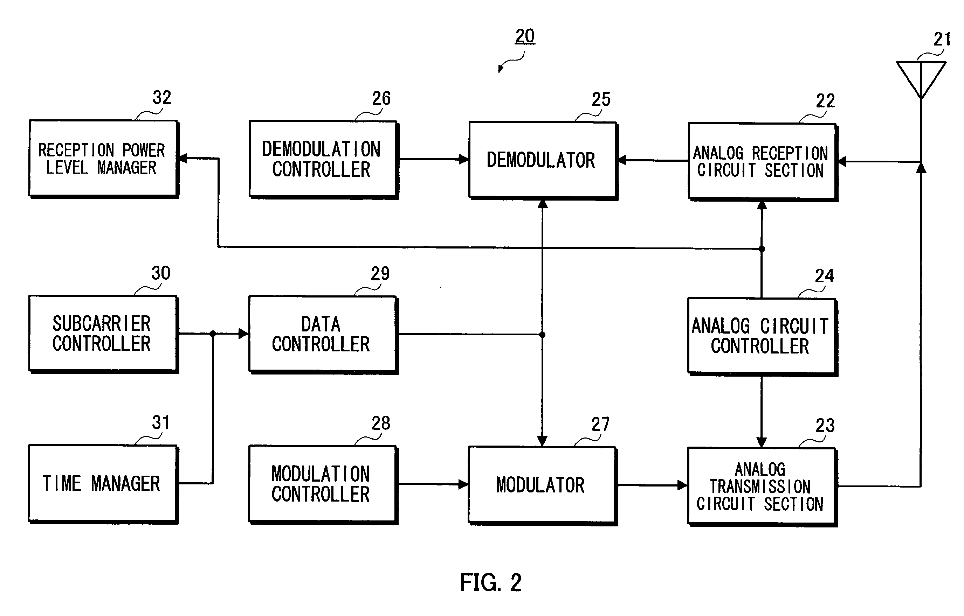

Fig. 2 is a block diagram showing the outline configuration of the mobile station apparatus according to the present embodiment. As shown in Fig. 2, a mobile station apparatus 20 transmits/receives radio signals via one ormore antennas (herein, one antenna) 21. An analog reception circuit section 22 converts a received high-frequency signal into a digital signal. An analog transmission circuit section 23 converts a digital signal into a high-frequency signal. An analog circuit controller 24 controls the analog reception circuit section 22 and the analog transmission circuit section 23. A demodulator 25 is composed of a digital signal processing circuit for processing received data, and a demodulation controller 26 controls the demodulator 25. A modulator 27 is composed of a digital signal processing circuit for processing transmission data, and a modulation controller 28 controls the modulator 27. A data controller 29 performs a control of re-transmission and re-reception and the like. A subcarrier controller 30 controls transmission power of each subcarrier, an allocation to mobile station apparatus and the like. A time manager 31 manages time and a reception power level manager 32 manages reception power and the propagation path characteristics such as CINR.

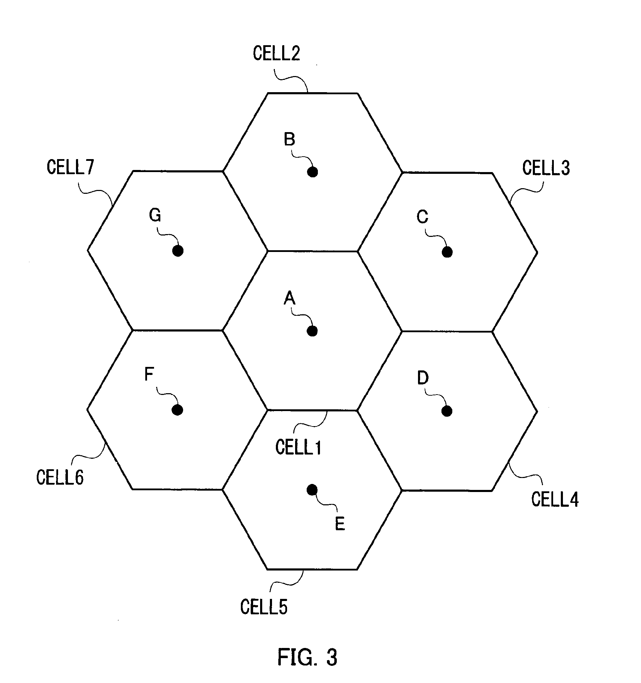

Fig. 3 illustrates a state in which a plurality of the base station apparatus configures a plurality of cells. The figure exemplifies an arrangement of cells based on a hexagonal cell generally used in a multi-cell system. In addition, the present invention is not limited to a cell arrangement of this shape.

The radio communication system according to the present embodiment realizes the radio data communication in cells which use the same frequency band. The present invention can be applied to all cells and base station apparatus constituting the system. The present specification will describe, focusing on an operation of a "cell 1" shown in Fig. 3.

In Fig. 3, base station apparatus A to G constitute cells 1 to 7 respectively. Each of the base station apparatus A to G uses all subchannels usable for radio data communication and can perform radio data communication with a mobile station apparatus existing in the cell. Further, it is assumed that mobile station apparatus (not shown) exist in each of the cells 1 to 7, and may perform the radio data communication with the base station apparatus A to G existing at the center of each of cells 1 to 7.

An operation in a cell of the base station apparatus and the mobile station apparatus as configured above will be described hereinafter. The base station apparatus performs the radio data communication with the mobile station apparatus in its own cell using an OFDM communication system. However, in the radio data communication, a plurality of or single subcarrier(s) may be selected from among entire frequency band allocated to the OFDM communication to perform the radio communication with each mobile station apparatus in its own cell. In this case, the transmission power profiles of more than the number (three profiles in an example described below) which may be set by switching at the certain time interval in such a manner that the same transmission power profile is not used by adjacent cells at the same time, are set in each base station apparatus. The radio data communication is performed by switching them at the certain time interval. Basically, each base station apparatus uses the same types and the same number of the transmission power profiles, however, the power maybe changed to adapt to a radio data communication range if a range is desired to change owing to a change in a cell size or the like.

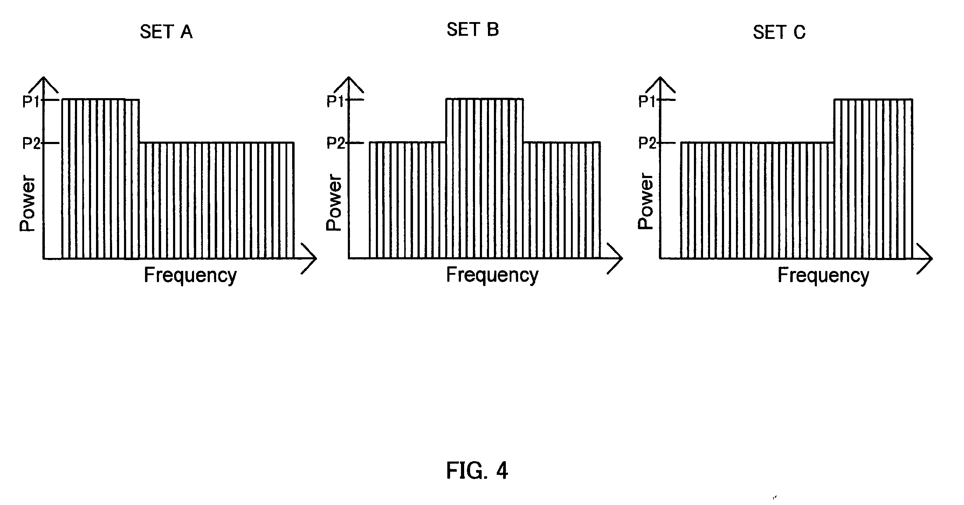

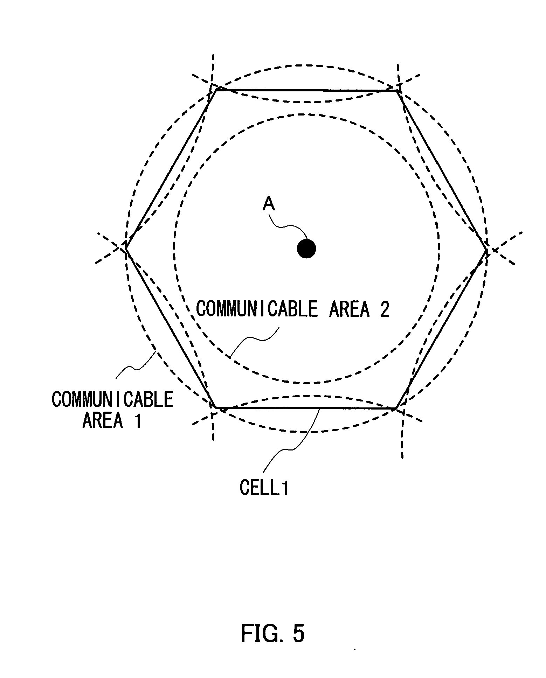

Fig. 4 is a drawing schematically illustrating three types of transmission power profiles. In a graph shown in Fig. 4, the horizontal axis indicates a subcarrier, while the vertical axis indicates a maximum transmission power. In this way, a transmission power profile denotes a profile in which the amount of the transmission power is previously determined in each subcarrier. Among respective transmission power profiles, a subcarrier in which the maximum transmission power is set to P1 is a subcarrier, which makes a whole area within the cell a communicable area. That is, in an enlarged drawing of cell 1 shown in Fig 5, communication with a mobile station apparatus within a communication area 1 is possible. Further, a subcarrier whose transmission power is set to P2 is a subcarrier used for performing the radio data communication within an area in which an interference level from the adjacent cells is not more than a value which becomes problematic in reception quality. Namely, it is a subcarrier which can communicate with the mobile station apparatus within a communication area 2 shown in Fig. 5. An interference level also depends on a performance of mobile station apparatus or the like. Therefore, it is not always required to set the power of P1 and P2 so as not to cause any interference. The subcarriers applied to the transmission power (P1 and P2) are not always required to be consecutive subcarriers.

Three types of the transmission power profiles shown in Fig. 4 are those which one base station apparatus uses by switching in each certain time cycle. Further, the base station apparatus of the adjacent cell uses similar transmission power profiles by changing an order of them and switching them so as not to use the same transmission profile with that of the adjacent base station apparatus at the same time. Here, a minimum number of the transmission power profiles is three which meets the condition that the base station apparatus of the adjacent cells do not use the same transmission power profile at the same time.

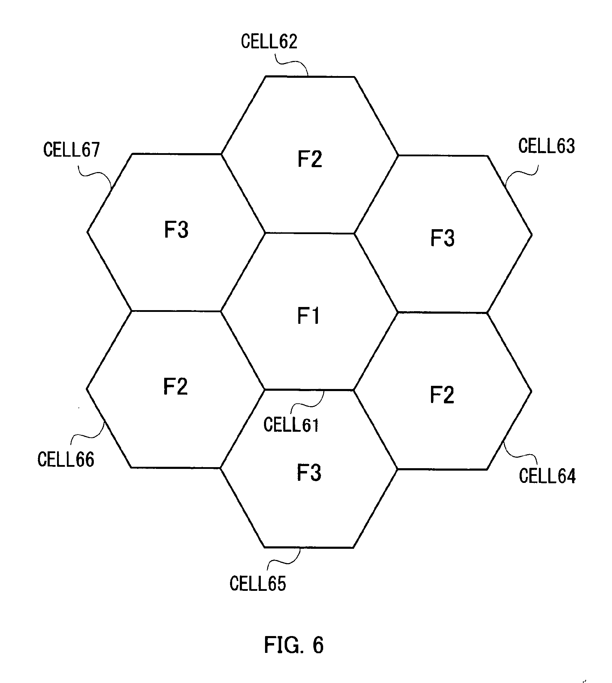

Generally, in a system constituted by hexagonal cells, combining at least three types of frequency bands allows to perform communication with the reduced interference. For example, if setting the transmission power P1 to one-third of all subcarriers on a low frequency band side, which is assumed to be "Set F1" as shown in Set A in Fig. 4, if setting the transmission power P1 to one-third of all subcarriers on a middle frequency band, which is assumed to be "Set F2" as shown in Set B in Fig. 4, and if setting the transmission power P1 to one-third of all subcarriers on a high frequency band side, which is assumed to be "Set F3" as shown in Set C in Fig. 4, it is possible to arrange cells so that the frequency bands to be used in adjacent cells by setting the transmission power P1 are surely different from that of the own cell as shown in Fig. 6.

Also in the present embodiment, by making a frequency band of subcarriers used in a communication area 1 shown in Fig. 5 different from those of subcarriers used with the transmission power P1 in the adjacent cells, it is made possible to configure a one-cell reuse system using the same frequency band. That is, based on the above, minimum three transmission power profiles become necessary in the above-mentioned example.

Further, in the present embodiment, by performing the radio data transmission in a frequency band to which the power P1 has been allocated when using other transmission power profile to a mobile station apparatus with a bad propagation path characteristics in a frequency band of subcarriers transmitted by the power P1 when using one transmission power profile, it is made possible to use all frequency bands within all areas in a cell by combining the transmission power profiles even if the propagation path characteristics in certain frequency band has become worse and the radio data transmission has become impossible, enabling to perform the radio communication seamlessly.

Specifically, in Fig. 3, by switching with certain time cycle to perform the radio data transmissions, for example, an order of a set of frequencies, A, B, C in cell 1; an order of B, C, A in cells 2, 4 and 6; and an order of C, A, B in cells 3, 5 and 7; it is made possible to perform continuous radio data transmission like an example in which, even if a mobile station apparatus which can communicate only in subcarriers set to the transmission power P1 near the cell edge of the cell 1, cannot perform the radio data communication in a set A due to an affection of the multipath or the like, waiting for a cycle of a set B or C after the certain time period enables to receive a transmission signal of radio data from base station apparatus by subcarriers to which the transmission power P1 is set.

However, the transmission power profiles are not limited to three types. When performing the radio data communication using three or more types of the transmission power profiles, it will be supported by setting the number of subcarriers set to the transmission power P1 below the number obtained by dividing the number of all subcarriers by the number of desired transmission power profiles.

The base station apparatus allocates each subcarrier to a plurality of mobile station apparatus in a cell to perform the radio data transmission simultaneously, however, it may change the transmission power of each subcarrier to below the maximum transmission power profile of each base station apparatus according to the reception characteristic of the mobile station apparatus, a requested transmission rate and the like.

As described above, according to the present embodiment, by setting two upper limit values to the transmission power in each carrier, it is made possible to prevent an interference with adjacent cells, while using the same frequency band with those of the adjacent base station apparatus. Further, by switching the upper limit values of the transmission power by the time, it is made possible to make all mobile station apparatus in a cell select subcarriers to be used for the radio data transmission from among all subcarriers.

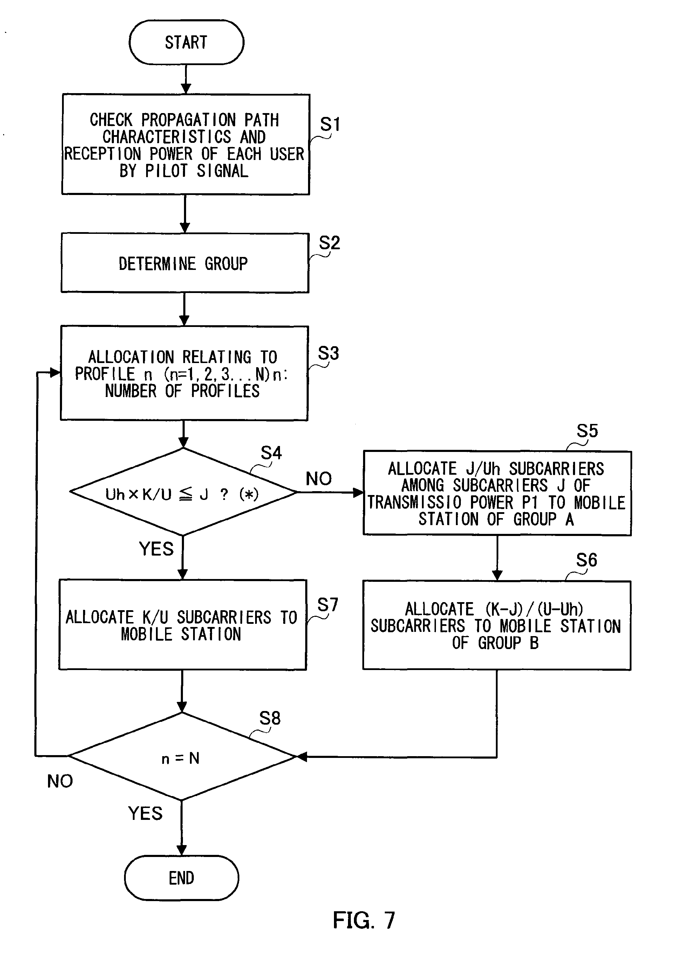

Next, an algorithm of allocating sub-carries will be described. Fig. 7 is a flow chart illustrating an algorithm of allocating the subcarries. First, each mobile station apparatus measures the propagation path characteristics (e.g., average reception power, CINR) relating to all subcarriers based on signals, an amplitude and a phase of which are known (pilot signals) transmitted from the base station apparatus for allocating subcarriers in each transmission power profile, and reports the result to the base station apparatus (step S1). Secondly, the base station apparatus determines a priority of selecting subcarriers for each mobile station apparatus based on this result, and allocates the subcarriers to the mobile station apparatus based on the priority. In this case, a priority is determined by using, for example, the average reception power values (or a middle value of the reception power in all subcarriers may be used), and ranking the low values, namely ranking the mobile station apparatus with longer distance from the base station apparatus. In this case, by setting a threshold to a value of the propagation path characteristics, it is configured in such a manner that, as for the mobile station apparatus with lower values less than the threshold values, subcarriers are allocated among the above-mentioned subcarriers set to the transmission power P1. The threshold values are used for classifying a group which can use subcarriers of the transmission power P1 and a group which cannot use. A group using the transmission power P1 determined by the above-mentioned method is referred to as "A", while a group which cannot is referred to as "B" (step S2).

Subsequently, an allocation of subcarriers in each transmission power profile to be used by the base station apparatus is made (step S3). At the start, as for a first transmission power profile, subcarriers to be used for the radio data communication are allocated according to an order determined by the above-mentioned method.

Here, if assuming that total number of mobile station apparatus is "U", total number of subcarriers is "K", total number of mobile station apparatus using subcarriers to which the transmission power has been highly set is Uh, it is determined whether (Uh*K/U) is less than the number "J" of subcarriers which are set so that the transmission is made from the base station apparatus with high power (step S4), If (Uh*K/U) is more, J/Uh subcarriers are allocated to the mobile station apparatus belonging to group A, which uses the subcarriers to which the transmission power has been highly set (step S5), while (K-J)/(U-Uh) subcarriers are allocated to the mobile station apparatus belonging to group B (step S6), and the process proceeds to step S8. On the other hand, in step S4, if (Uh*K/U) is less than the number J of the subcarriers which are set so that the transmission is made from the base station apparatus with high power, K/U subcarriers are allocated to mobile station apparatus belonging to group A and group B respectively (step S7).

Afterwards, subcarriers including those set to the transmission power P2 are continuously allocated to the remaining mobile station apparatus. Then, if the allocation has not been completed as for a transmission power profile n, the process moves to step S3. If all the steps have been completed, this process is terminated.

In this way, if the allocation of subcarriers is made, as for the mobile station apparatus physically distant from the base station apparatus in the cell or the mobile station apparatus which are near, but having the low propagation path characteristics due to the affection of obstacles, the subcarriers of the transmission power P1 are allocated. As for the near mobile station apparatus, subcarriers of the transmission power P2 and the transmission power P1 which was not selected in accordance with the above-mentioned selection procedures are allocated.

Similarly, as for the other transmission power profile, an allocation is made. This is made using the information obtained when the propagation path characteristics are searched based on the known signals. The same allocation procedures will be made except that subcarriers in which the maximum transmission power is set to P1 in the transmission power profile are different.

According to the algorithm shown above, the subcarriers are allocated in the present embodiment, however, if meeting the values of transmission power described above, and transmission rate required by each mobile station apparatus, an interference from adj acent subcarriers may be further reduced by making adaptive modifications.

Further, the present embodiment describes a method that base station apparatus sets power and allocates it in each subcarrier. However, also in case where it handles a plurality of subcarriers collectively as a sub channel, the same effect will be obtained by setting the maximum transmission power and the transmission power profiles.

In addition, although in the present embodiment as shown in Fig. 4, an example in which all subcarriers are divided into every one-third subcarriers from a low frequency side, to set each to the transmission power P1, was shown. However, the present invention is not limited to this. For example, a transmission power profile in which the transmission power P1 is set to (3n-2 (where n is a natural number))-th subcarrier from a low frequency side of subcarriers as a set A, a transmission power profile in which the transmission power P1 is set to (3n-1 (where n is a natural number))-th subcarrier from a low frequency side of subcarriers as a set B, and a transmission power prof ile in which the transmission power P1 is set to (3n (where n is a natural number))-th subcarrier from a low frequency side of subcarriers as a set C may be used. That is, for generating the transmission power profiles the number of types of which corresponds to an inverse number of a repetition cells, therefore, by determining a ratio of subcarriers to which the transmission power P1 is set against all subcarriers, it is made possible to set the transmission power P1 to any number of frequency subcarriers according to the ratio.

As described above, according to the radio communication system of the present embodiment, by changing subcarriers to which the first transmission power which enables the radio signals to reach all areas within a cell at a certain time cycle is set, it is made possible to configure a one-cell reuse system in which while using the same frequency band as those of the adjacent base station apparatus, they do not interfere with each other. Further, even if the propagation path characteristics are bad when transmitting the radio signal using the subcarriers of a specific frequency band to which the first transmission power is set to one mobile station apparatus, it is possible to transmit the radio signal to the above-mentioned mobile station apparatus using subcarriers of other frequency band to which the first transmission power is set, as subcarrier to which the first transmission power is set are changed at certain time intervals. Thereby, it is possible to use all frequency bands at all areas within the cell, enabling to perform the radio communication seamlessly.

### Brief Description of the Drawings

Fig. 1 is a block diagram showing the outline configuration of a base station apparatus.
Fig. 2 is a block diagram showing the outline configuration of a mobile station apparatus.
Fig. 3 is a drawing illustrating cells configured by each base station apparatus in a radio communication system.
Fig. 4 is a drawing illustrating three types of transmission power profiles.
Fig. 5 is a drawing showing a communicable area in a cell.
Fig. 6 is a drawing showing cells configured by respective base station apparatus in the radio communication system.
Fig. 7 is a flow chart illustrating an algorithm of allocating subcarries.

### Explanation of Reference Numerals

- 1: base station apparatus
- 2a, 2b: antenna
- 3: analog reception circuit section
- 4: analog transmission circuit section
- 5: analog circuit controller
- 6: demodulator
- 7: demodulation controller
- 8: modulator
- 9: modulation controller
- 10: data controller
- 11: subcarrier controller
- 12: time manager
- 13: mobile station information controller
- 20: mobile station apparatus
- 21: antenna
- 22: analog reception circuit section
- 23: analog transmission circuit section
- 24: analog circuit controller
- 25: demodulator
- 26: demodulation controller
- 27: modulator
- 28: modulation controller
- 29: data controller
- 30: Subcarrier controller
- 31: time manager
- 32: reception power level manager
- A to G: base station apparatus

## Claims

1. Abase station apparatus (1) transmitting radio signals using a multicarrier modulation system, comprising:
a time manager (12) for obtaining time information to manage it;
a transmission power setting section (11) for setting to some subcarriers among all subcarriers a first transmission power which enables the radio signals to reach all areas within a cell; and
a transmitter (2B,4,8,9,10) for transmitting the radio signals using the subcarriers to which said first transmission power is allocated, wherein
said transmission power setting section (11) changes at a certain time interval, subcarriers to which said first transmission power is set based on said obtained time information.

2. The base station apparatus (1) according to claim 1, wherein;
said transmission power setting section (11) sets to subcarriers other than those to which said first transmission power is set, a transmission power less than a second transmission power which is a maximum transmission power not interfering with adjacent cells; and
said transmitter (2B, 4, 8, 9, 10) transmits the radio signals using the subcarriers to which said first transmission power is set and the subcarriers to which the transmission power less than said second transmission power is set.

3. The base station apparatus (1) according to claim 1 to 2, further comprising:
a detector (13) for detecting propagation path characteristics of the radio signals in the downward direction transmitted from a plurality of mobile station apparatus existing within said cell, wherein;
said transmission power setting section (11) utilizes the radio signals to the mobile station apparatus, said detected propagation path characteristics to which are relatively low, using the subcarriers to which said first transmission power is set.

4. The base station apparatus (1) according to claim 1 or 2, further comprising:
a detector (13) for detecting propagation path characteristics of the radio signals in the downward direction transmitted from one or more mobile station apparatus existing within said cell, wherein;
said transmission power setting section (11) determines whether said detected propagation path characteristics are lower than threshold values for each said mobile station apparatus, and transmits the radio signals to the mobile station apparatus said detected propagation path characteristics to which are lower than the threshold values, using the subcarriers to which said first transmission power is set.

5. The base station apparatus (1) according to claim 4, wherein;
when, the total number of the mobile station apparatus existing within said cell is U, the total number of subcarriers used for transmission is K, the total number of the mobile station apparatus to which the radio signals are to be transmitted using the subcarriers to which said first transmission power is set is Uh, and the total number of the subcarriers to which said first transmission power is set is J,
in the case of (Uh*K/U)>J, said transmission power setting section (11) allocates (J/Uh) subcarriers to which said first transmission power is set per mobile station apparatus to the mobile station apparatus to which the radio signals are to be transmitted using the subcarriers to which said first transmission power is set, and
in the case of (Uh*K/U) ≤ J, it allocates (K/U) subcarriers to which said first transmission power is set per mobile station apparatus to the mobile station apparatus to which the radio signals are to be transmitted using the subcarriers to which said first transmission power is set.

6. A radio communication system comprising a plurality of the base station apparatus (1) according to any of claims 1 to 5, and transmitting radio signals to mobile station apparatus (20) existing within a cell from said base station apparatus using a multicareer modulation system, wherein;
all of said transmission power setting sections of each of said base station apparatus change subcarriers to which said first transmission power is set to subcarriers having frequencies different from those of other base station apparatus constituting adjacent cells at the same time of day.

7. A radio communication method transmitting radio signals using a multicarrier modulation system, comprising the steps of:
obtaining time information;
setting to some subcarriers among all subcarriers a first transmission power enabling the radio signals to reach all areas within a cell;
setting to subcarriers other than those to which said first transmission power is set, a transmission power below a second transmission power which is a maximum transmission power not interfering with adjacent cells;
transmitting the radio signals using the subcarriers to which said first transmission power is set and the subcarriers to which the transmission power below said second transmission power is set; and
changing subcarriers to which said first transmission power is set and subcarriers to which said second transmission power is set, at a certain time interval based on said obtained time information.
